# EUROPEAN PATENT APPLICATION

(11) **EP 1 666 987 A2**
(43) Date of publication of application: **07.06.2006**
(21) Application number: 06110403.0
(22) Date of filing: 23.12.1999
(51) Int. Cl.: G03H 1/02, B44F 1/10, B44C 1/24

(54) **A method for replicating a surface relief and an article for holding a surface relief**

(30) Priority: 30.12.1998 DK 174598
(62) Divisional of application: 99962127.9
(71) Applicant: Glud & Marstrand A/S, 8723 Losning (DK)
(72) Inventor: Lindvold, Lars, Kokkedal 2980 (DK); Stensborg, Jan, Copenhagen V 1620 (DK)
(74) Representative: Plougmann & Vingtoft A/S

(57) **Abstract**

The present invention relates to a method for replicating a surface relief. In particular, the present invention relates to a method for replicating a surface relief in a non-metallic layer being held by a metal substrate. Furthermore, the present invention relates to an article for holding a surface relief. The article will typically form an integral part of a metal container, such as a food container.

## Description

The present invention relates to a method for replicating a surface relief in a non-metallic layer. In particular, the present invention relates to a method for replicating a surface relief in a non-metallic layer being held by a metal substrate. Furthermore, the present invention relates to an article for holding a surface relief, said article being manufactured according to the above-mentioned method.

The use of holograms as means to protect printed materials and other products against counterfeiting has gained wide acceptance in industry today. Holograms are also used as decoration on printed materials, in particular packaging. Holograms are either applied as labels or by hot embossing of holographic foils.

Generally, inducing holograms directly into metals is very costly whereby the cost of each item becomes high. Furthermore, there are limitations in choice of metals, and the durability of these metals is low.

US 4,725,111 and US 4,773,718 both pertain to processes of embossing holograms directly into a metal surface, preferably aluminium. Embossing of holograms directly into a metal requires that high pressure is applied to the embossing tool due to the hardness of the metal. In US 4,725,111 and US 4,773,718 this problem has been solved by running the embossing process at elevated temperatures - i.e. the temperature of the metal is heated above room-temperature during embossing of holograms.

It is a disadvantage of the processes described in US 4,725,111 and US 4,773,718, that in order to soften the aluminium the embossing process must take place at elevated temperatures so as to reduce the hardness of the aluminium.

US 4,900,111 describes a technique for embossing holograms into a hard metal surface. The hard metal surface is coated with a soft metal layer, preferably tin, whereby embossing may take place at room-temperature.

US 5,193,014 describes a method of using a simple diffraction grating in the bottom of a tin can as a pressure gauge. Using the described method the filling of the can - e.g. with beverages - may be controlled by monitoring light diffracted from the diffraction grating.

It is a disadvantage of all the above-mentioned techniques, that a relative high pressure is required in order to press the embossing tool into the material in question.

It is a further disadvantage of all the above-mentioned techniques that due to the high pressure required - and therefore also the time required to manufacture e.g. a hologram - none of the above-mentioned techniques can be combined with high speed manufacturing of e.g. food containers.

It is a still further disadvantage of all the above-mentioned techniques that the article in which a hologram is to be induced may not be prepared with a colour print prior to embossing the hologram.

It is a still further disadvantage of all the above-mentioned techniques that no visual effects provided by colour prints may be combined with holograms.

It is an object of the present invention to provide a technique for replicating a surface relief into a broad range of materials, preferably non-metallic materials.

It is a further object of the present invention to provide a technique for replicating a surface relief without applying a high pressure to the embossing tool.

It is a still further object of the present invention to provide a technique for replicating a surface relief at high speeds and at room-temperature. In particular, the technique should be applicable for high-speed production lines for manufacturing e.g. food containers.

The above-mentioned objects are complied with by providing, in a first aspect, a method for replicating a surface relief, said method comprising the steps of
- providing a first layer of a non-metallic material, and
- pressing into the first layer of non-metallic material an object comprising a surface so as to change surface properties of the first layer of non-metallic material in order to replicate at least one surface relief, said at least one surface relief forming part of the surface of the object.

The first layer of non-metallic material may preferably be selected from the group consisting of lacquers, polymers, printing inks or any combination thereof. The first layer may in principle be held by any kind of substrate. Preferably, the first layer is held by a metal substrate.

The substrate may be substantially plane. Alternatively, the substrate may be curved. In order to replicate a surface relief having surface variations on a sub-micron scale the surface of the substrate has to fulfil certain requirements. The surface of the substrate should be as smooth as possible.

The metal substrate may hold a colour print so as decorate the surface and to enhance visual effects generated by the surface relief upon incident of external illumination.

In order to protect the replicated surface relief the method may further comprise the step of providing a second layer, said second layer being substantially transparent and covering at least part of the first layer of non-metallic material. This second layer may be selected from the group consisting of lacquers, polymers, laminated plastic, printing inks or any combination thereof. The second layer may be provided so as to follow the surface variations of the replicated surface relief. Alternatively, the second layer may be provided so as to encapsulate the replicated surface relief. In this situation the second layer does not necessarily follow the surface variations of the surface relief.

In order obtain visual effects the refractive indices of the first and second layers must be different. The at least one surface relief replicated in the first layer of non-metallic material may comprise a diffracting optical element, such as a hologram, grating or the like.

Preferably, the thickness of the first layer of non-metallic material is within the range 1-50 µm, such as within the range 2-25 µm, such as within the range 2-20 µm, such as within the range 5-15 µm, such as within the range 5-10 µm.

Replication of the at least one surface relief may be performed as a part of a rolling process or a stamping process or any combination thereof.

In a second aspect, the present invention relates to a method for replicating a surface relief, said method comprising the steps of
- providing a first layer of a non-metallic material, said first layer of non-metallic material being held by a metal substrate,
- pressing into the first layer of non-metallic material an object comprising a surface so as to change surface properties of the first layer of non-metallic material in order to replicate at least one surface relief, said at least one surface relief forming part of the surface of the object, and
- providing a metal layer onto at least part of the at least one replicated surface relief, said metal layer being substantially conform with the at least one replicated surface relief.

Again, the first layer of non-metallic material may be selected from the group consisting of lacquers, polymers, printing inks or any combination thereof.

By substantially conform is meant that the thickness of the metal layer is essentially constant, whereby the surface variations of the surface relief are maintained.

The method according to the second aspect of the present invention may further comprise the step of providing a second layer, said second layer being substantially transparent and covering at least part of the metal layer.

Similar to the first aspect of the present invention, the second layer may be selected from the group consisting of lacquers, polymers, laminated plastic, printing inks or any combination thereof. The thickness of the first layer of non-metallic material is preferably within the same range as the first layer according to the first aspect of the present invention.

The at least one surface relief replicated in the first layer of non-metallic material may comprise a diffracting optical element, such as a hologram, grating or the like.
The metal layer covering at least part of the at least one replicated surface relief may comprise a highly refractive material, such as aluminium, silver, gold, titanium dioxide and zirconium dioxide or any combination thereof.

Replication of the at least one surface relief may be performed as a part of a rolling process or a stamping process or any combination thereof.

Preferably, the providing of the first layer of non-metallic material and the changing of the surface properties of said first layer is performed during essentially the same manufacturing process. By essentially is meant within a time period of a few minutes. The replicated surface relief is essentially permanent over time. By essentially permanent is meant that the replicated surface relief is stable over a period of at least 12 months.

The surface of the object being pressed into the first layer of non-metallic material is preferably fabricated from a refractory material. Alternatively the surface may be hardened so as to reduce wear of the surface of the object.

In a third aspect, the present invention relates to an article for holding a surface relief, said article comprising
- a metal substrate, and
- a first layer of non-metallic material being held by the substrate, said first layer of non-metallic material being adapted to hold at least one surface relief.

Also in the aspect, the at least one surface relief being held by the first layer of non-metallic material may comprise a diffracting optical element, such as a hologram, grating or the like.

The first layer of non-metallic material may be selected from the group consisting of lacquers, polymers, printing inks or any combination thereof.

The order to protect the surface relief the article may further comprise a second layer, said second layer being substantially transparent and covering at least part of the first layer of non-metallic material. The second layer, which has a reflective index different from the first layer of non-metal material, may be selected from the group consisting of lacquers, polymers, laminated plastic, printing inks or any combination thereof.

The metal substrate may hold a colour print so as to enhance visual effects. Preferably, the article forms an integrated part of a container, such as a food container. In the present context food containers also means confectionery containers, tobacco containers, milk powder containers, containers for heat-treated food, cake cans or biscuit cans. Alternatively, the container may be a container for beverages. Finally a container may also be a general-purpose bucket, such as a bucket for holding paint.

The above-mentioned types of containers are known as either food containers or non-food containers.

In a fourth aspect, the present invention relates to an article for holding a surface relief, said article comprising
- a metal substrate,
- a first layer of non-metallic material being held by the substrate, said first layer of non-metallic material being adapted to hold at least one surface relief, and
- a metal layer covering at least part of the first layer of non-metallic material and being substantially conform with the at least one replicated surface relief being held by the first layer of non-metallic material.

Again, the at least one surface relief being held by the first layer of non-metallic material may comprise a diffracting optical element, such as a hologram. The first layer of non-metallic material may be selected from the group consisting of lacquers or polymers or any combination thereof. The wording "substantially conform" has previously been defined.

The metal layer covering at least part of the at least one replicated surface relief may comprise a material selected from the group consisting of aluminium, silver, gold, titanium dioxide and zirconium dioxide or any combination thereof.

The article according to the fourth aspect of the present invention may further comprise a second layer, said second layer being substantially transparent and covering at least part of the metal layer, said second layer being adapted to protect the replicated surface relief and the metal layer. The second layer may be selected from the group consisting of lacquers, polymers, laminated plastic or any combination thereof.

Preferably, the article according to the fourth aspect of the present invention forms an integrated part of a container, such as a food container. The different types of containers have previously been discussed.

The present invention will now be described in further details with reference to the accompanying figures.
Figure 1 illustrates a replicated surface relief 3 in a non-metallic layer 2. The non-metallic layer 2 is being held by a metal substrate 1.
Figure 2 shows the article shown in figure 1 where the surface relief 3 is covered by a protective layer 4.
Figure 3 shows the article shown in figure 1 where the surface relief 3 is covered by a protective layer 5.
Figure 4 illustrates a replicated surface relief 3 in a non-metallic layer 2. The surface relief is covered with a thin and conform metal layer 6 in order to enhance reflectivity from the article. As in figure 1 the non-metallic layer 2 is being held by a metal substrate 1.
Figure 5 shows the article shown in figure 5 where the thin and conform metal layer 6 is covered by a protective layer 4.
Figure 6 is similar to figure 2 except that the metal substrate holds a colour print 7.
Figure 7 is similar to figure 3 except that the metal substrate holds a colour print 7.
Figure 8 shows the principle of a rolling process.
Figure 9 shows the principle of a stamping process.

Replication of surface relief's according to the present invention forms an integral part of a colour printing process in the manufacturing of metal containers for the food industry. In this way, cuts and savings in production time and resources are achieved. Last but certainly not least, holograms will appear as an integral part of the product, i.e., an integral part of a metal container. This gives a more uniform design of a metal substrate and protects the container against counterfeiting.

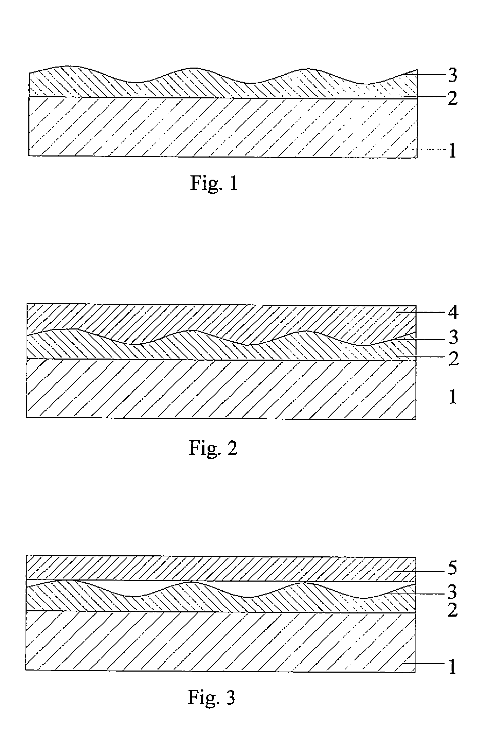

Referring now to figure 1, an article according to a preferred embodiment of the present invention is shown. The article comprises a metal substrate 1 which, in figure 1, is shown as a plane substrate. However, the substrate may as well be curved so as to form a sidewall of e.g. a cylindrical shaped food container. The surface of the substrate should be as smooth as possible. Preferably, the substrate is metal, such as aluminium or tinplate.

As seen in figure 1 the substrate holds a layer of non-metallic material 2. Preferably, the non-metallic layer is one of the following lacquers - DI 4004 or lacquer no. 1402-011 both supplied by the company Valspar Coates. Alternatively, the following lacquers may be used:
EG 41001 F, EG 41082 F and EQ 16003 F from PPG
77/6/5 Z from Vernicolor
11545 from Manders
ME 812 F, 11573MA from Valspar Coates

A surface relief 3 has been replicated in the non-metallic layer 2. The replicated surface relief 3 is seen as small spatial variations in the surface topology of the non-metallic layer 2. Preferably, the surface relief 3 is a diffracting optical element, such as a hologram, grating or the like. The thickness of the non-metallic layer is typically within the range 5-10 µm, which is sufficient to absorb the depth variations of the surface relief 3. These are typically in the 50-300 nm range.

In order to protect the replicated surface relief 3 a protective layer of transparent material 4 and 5 may optionally be provided on top of the replicated surface relief. These protective layers 4 and 5 are shown in figure 2 and 3.
In figure 2 the lower surface of the protective layer 4 follows the surface variations of the surface relief 3. In figure 3 the protective layer 5 does not follow the surface variations of the surface relief 3 whereby air gaps are formed between the protective layer 5 and the surface of the surface relief 3.

In order to obtain visual effects from the surface relief 3 in figure 2 the refractive index of the non-metallic layer 2 must be different from the refractive index of the protective layer 4. The protective layers 4 and 5 are selected among the same group of lacquers as the non-metallic layer 2.

Referring now to figure 3, the requirements regarding the refractive indices are not as critical as in figure 2. This is due to the air gaps between the non-metallic layer and the protective layer. The reason for this being that the air gaps automatically result in a refractive index step at the surface of the surface relief 3.

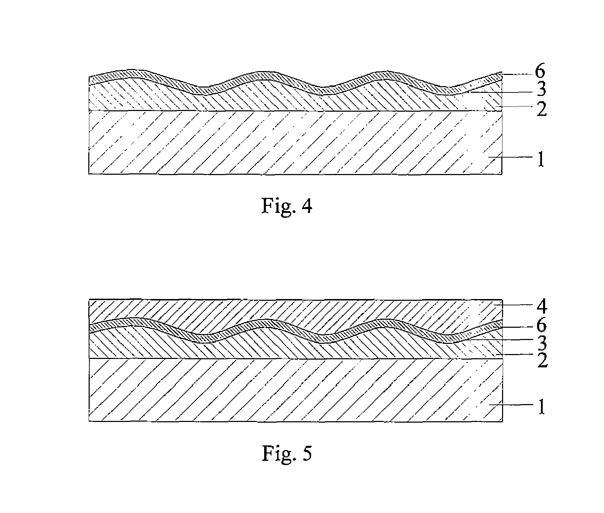

The visual effects obtained from the articles shown in figure 2 and 3 are generated by the refractive index difference between the non-metallic layer and the adjacent medium (protective layer or air). One way of enhancing the visual effects is to coat the surface of the surface relief 3 with a thin and conform metal layer 6, which enhances the reflectivity of the article. It is important to stress that the metal layer 6 must be conform so as to maintain the surface variations of the surface relief. An article having such a metal layer 6 is shown in figure 4 and 5. In figure 4 the metal layer 6 will be exposed to the surrounding environment whereas, in figure 5, the metal layer 6 is covered with a protection layer 5. Preferably, the metal layer 6 is protected by a protective layer whereby oxidation and other damages of the surface variations may be significantly reduced. The protective layer also protects the replicated surface relief against wear.

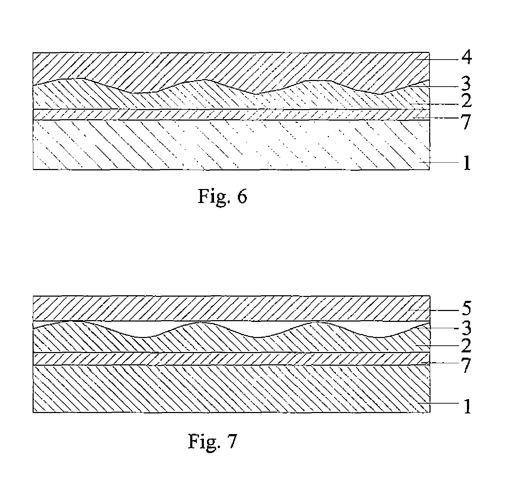

Visual effects may also be enhanced if the substrate, prior to providing the non-metallic layer, comprises a colour print - as illustrated in figure 6 and 7. The colour print 7 is a colour layer positioned between the metal substrate 1 and the non-metallic layer 2. The colour print 7 will typically contain a decoration, such as a logo, trademark etc. The best visual effects have been observed using dark colours, e.g. dark blue.

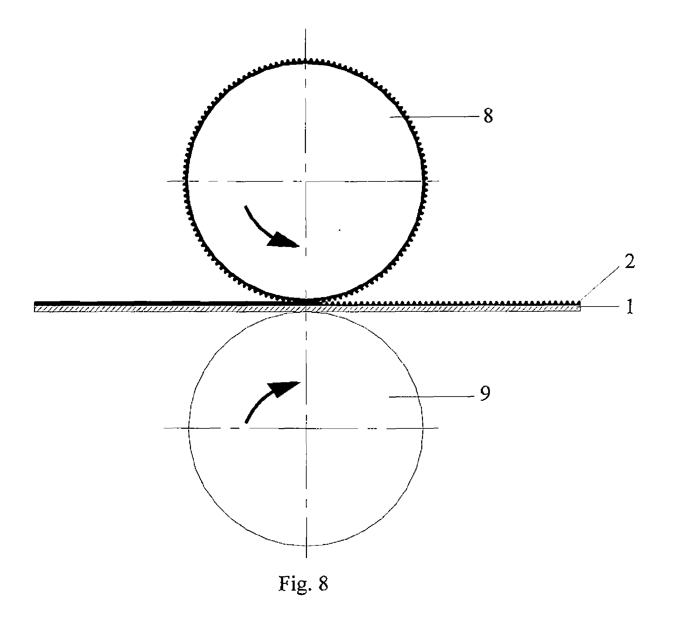

As previously mentioned replication of a surface relief may be performed as a part of a rolling or a stamping process. The general principle of a rolling process is illustrated in figure 8 where the carrier roll 9 is adapted to hold and move the substrate 1 and non-metallic layer 2. The replicating tool 8 is positioned above the carrier roll. The pressure applied to the replicating tool during embossing is dependent on the properties of the non-metallic layer. The applied pressure is within the range 100-1000 kg/cm². Preferably, the applied pressure is within the range 300-400 kg/cm². Compared to conventional systems where holograms are embossed directly into metal substrates the required pressure in the present invention has been significantly reduced.

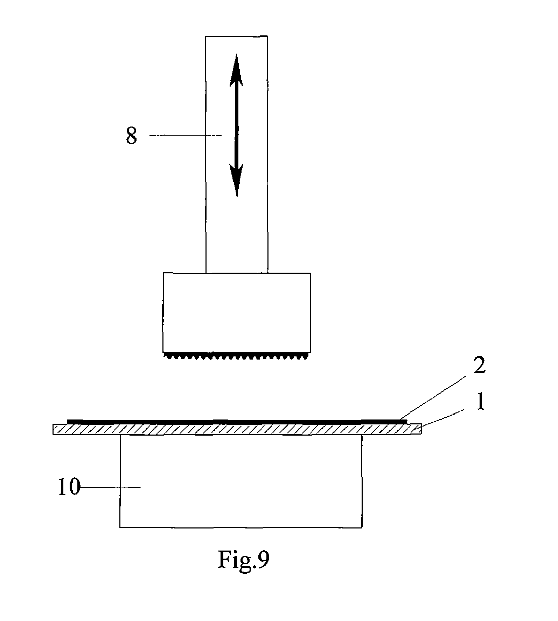

In figure 9 a stamping process is illustrated. The substrate 1 holding the non-metallic layer 2 is positioned on a support structure 10. Again, the embossing tool 8 is pressed into the non-metallic layer 2 in order to replicate a surface relief.

For industrial purposes, where high-speed manufacturing is required, the rolling process is the most favourable. Furthermore, the rolling process may be easily adapted to conventional rolls.

## Claims

1. A method for replicating a surface relief, said method comprising the steps of
- providing a first layer of a non-metallic material, and
- pressing into the first layer of non-metallic material an object comprising a surface so as to change surface properties of the first layer of non-metallic material in order to replicate at least one surface relief, said at least one surface relief forming part of the surface of the object, and
- providing a second layer, said second layer being substantially transparent and covering at least part of the first layer of non-metallic material.

2. A method according to claim 1, wherein the first layer of non-metallic material is selected from the group consisting of lacquers, polymers, printing inks or any combination thereof.

3. A method according to claim 1 or 2, wherein the first layer of non-metallic material is being held by a metal substrate.

4. A method according to claim 3, wherein the metal substrate holds a colour print.

5. A method according to any preceding claim, wherein the second layer is selected from the group consisting of lacquers, polymers, laminated plastic, printing inks or any combination thereof.

6. A method according to any preceding claim, wherein the refractive index of the first layer of non-metallic material and the second layer is different.

7. A method according to any of the preceding claims, wherein the at least one surface relief replicated in the first layer of non-metallic material comprises a diffracting optical element.

8. A method according to any of the preceding claims, wherein the thickness of the first layer of non-metallic material is within the range 1-50 µm, such as within the range 2-25 µm, such as within the range 2-20 µm, such as within the range 5-15 µm, such as within the range 5-10 µm.

9. A method according to any of the preceding claims, wherein replication of the at least one surface relief is performed as a part of a rolling or a stamping process.

10. An article for holding a surface relief, said article comprising
- a metal substrate, and
- a first layer of non-metallic material being held by the substrate, said first layer of non-metallic material being adapted to hold at least one surface relief, and
- a second layer being substantially transparent and covering at least part of the first layer of non-metallic material.

11. An article according to claim 10, wherein the at least one surface relief being held by the first layer of non-metallic material comprises a diffracting optical element.

12. An article according to claim 10 or 11, wherein the first layer of non-metallic material is selected from the group consisting of lacquers, polymers, printing inks or any combination thereof.

13. An article according to any of claims 10-12, wherein the second layer is selected from the group consisting of lacquers, polymers, laminated plastic, printing inks or any combination thereof.

14. An article according to any of claims 10-13, wherein the refractive index of the first layer of non-metallic material and the second layer is different.

15. An article according to any of claims 10-14, wherein the metal substrate holds a colour print.

16. An article according to any of claims 10-15, wherein the article forms an integrated part of a container, such as a food or beverage container.
